# EUROPEAN PATENT APPLICATION

(11) **EP 1 179 696 A2**
(43) Date of publication of application: **13.02.2002**
(21) Application number: 01118744.0
(22) Date of filing: 07.08.2001
(51) Int. Cl.: F16J 15/08

(54) **Cylinder head gasket with step regulation layer**

(30) Priority: 07.08.2000 JP 2000238769
(71) Applicant: ISHIKAWA GASKET CO. LTD., Tokyo (JP)
(72) Inventor: Miyaoh, Yoshio, Adachi-ku, Tokyo (JP); Akimoto Noriaki, Adachi-ku, Tokyo (JP)
(74) Representative: Banzer, Hans-Jörg, Dipl.-Ing.

(57) **Abstract**

A cylinder head gasket (1, 1A) for an internal combustion engine is formed of first and second metal plates (10, 20) laminated together. The first plate (10) has a first hole, a first bead (11) surrounding the first hole, and an inner portion (10a) extending from an edge of the first hole to an inner side of the first bead. The second plate (20) has a second hole, and a second bead (21) surrounding the second hole and located above the inner portion. When assembled, the first bead faces the second plate and the second bead faces the first plate. A step regulation layer (30) formed of resin is deposited on at least a part of the inner portion (10a) of the first plate such that the second bead (21) is placed on the step regulation layer. The surface pressure for the first bead can be easily adjusted by the step regulation layer.

## Description

### Background of the Invention and Related Art Statement

The present invention relates to a cylinder head gasket with a step regulation layer formed around a hole to be sealed.

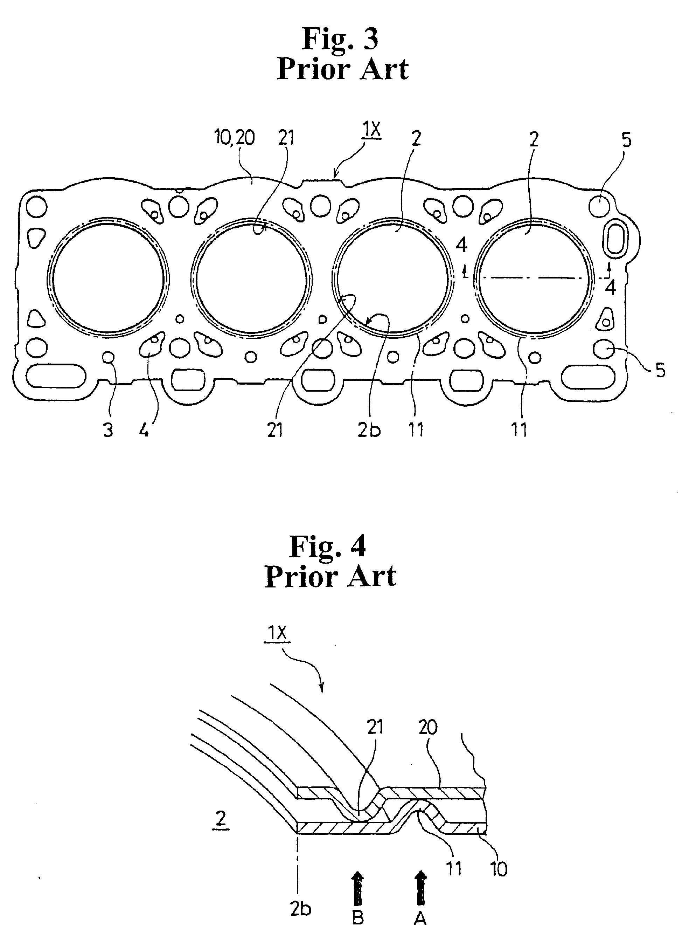

As shown in Fig. 3, a cylinder head gasket for sealing between a cylinder head and a cylinder block includes holes 2 for cylinder bores, oil holes 3, water holes 4, bolt holes 5 and so on. Also, in order to seal combustion gases generated in the combustion chambers, oil circulating through an oil gallery and water in a water jacket, the gasket includes sealing means, such as beads and seal rings, for providing adequate sealing pressures for the respective holes to be sealed.

Especially, since high temperature and high pressure combustion gases are generated in the holes for the cylinder bores when the engine is operated, sealing around the holes for the cylinder bores is especially important. Therefore, a metal gasket superior to mechanical strength and durability is used, and the sealing means, such as beads, are arranged around the holes for the cylinder bores.

As one of the head gaskets, there is a cylinder head gasket 1X, as shown in Fig. 4. In the cylinder head gasket 1X, a first bead 11 for forming a main sealing portion is arranged around an entire peripheral portion 2b of the hole for the cylinder bore of a first plate 10 to generate a high sealing surface pressure to thereby form a seal line. In order to protect creep relaxation of the first bead 11, a second metal plate 20 with a second bead 21 is laminated at a projecting side of the first bead 11. The first and second plates 10, 20 are arranged such that the second bead 21 is located inside the first bead 11, and the projection sides of the beads 11, 21 face between the plates 10, 20.

In the gasket 1X, a seal line A is formed by the compression of the first bead 11 at the time of tightening of the gasket between the cylinder head and the cylinder block. When the pressure to the gasket is increased in operating the engine, the second bead 21 supports the plate 10 inside the first bead 11. Thus, the flattening and creep relaxation of the first bead 11 are prevented.

The surface pressure distribution and the sealing characteristics of the seal line A formed by the first bead 11 are determined by the relation of the heights of the first and second beads. In the regular engine for the vehicle, the thickness of the metal plate for the gasket is 0.15-0.5 mm, and the height of the bead is 0.1-0.4 mm. Since the height is low, precise processing is required.

In a metal gasket, a metal shim is often provided to form a step or step portion between a first seal portion and a second seal portion. When the metal shim is installed, a precise adjustment of the step is difficult; cost of the gasket is high; and sealing ability is low.

Namely, in installing the metal shim, the metal shim needs rigidity in some extent, so that it is required to have the thickness more than 30 µm. Also, it is difficult to precisely adjust the thickness, and the final thickness of the metal shim is likely to change when it is attached. Therefore, it is difficult to obtain the desired sealing surface pressure precisely.

Also, the metal shim is difficult in processing, and the processing accuracy is not maintained. Further, the metal shim can not be supplied properly, and the additional processing steps and the storage of the metal shim are required in manufacturing the gasket, to cause the increase of cost.

On the other hand, since the contact between the first bead 11 and the metal plate 20 and the contact between the second bead 21 and the metal plate 10 are metal contacts, small spaces are likely to be formed due to projections and dents by tool marks, vibrations and thermal changes of the engine. High pressure and high temperature combustion gas may leak through the spaces.

When the high temperature and high pressure combustion gas leaks between the metal plates 10, 20, it reaches through a space between the plates 10, 20 the sealing portions of the oil hole 3 and water hole, and is likely to enter the holes 3, 4. When the combustion gas enters the oil hole 3 and water hole 4, air inclusion occurs to cause a trouble in circulation of oil and water. This may cause a large engine trouble, such as sticking by burning and overheat. Therefore, it is very important to seal the combustion gas.

Also, as the engine is made smaller, the area of the gasket 1X is narrower. In case a distance between the first and second beads 11, 21 is hardly established, the beads 11, 21 are disposed close to each other. In this case, when the first plate 10 and the second plate 20 are shifted laterally due to the vibration and thermal expansion of the engine, the side surfaces of the first and second beads 11, 21 contact with each other to possibly cause damages to the beads 11, 21.

The present invention has been made to obviate these problems, and an object of the invention is to provide a cylinder head gasket, in which a step between the first and second beads can be adjusted precisely to obtain a desired sealing surface pressure.

Another object of the invention is to provide a cylinder head gasket as stated above, in which a sealing ability against a combustion gas leakage between a first metal plate with a first bead and a second metal plate with a second bead is improved.

Further objects and advantages of the invention will be apparent from the following description of the invention.

### Summary of the Invention

A cylinder head gasket of the invention is formed of first and second metal plates. The first metal plate has a first hole corresponding to a hole of the engine, a first bead surrounding the first hole, and an inner portion extending from an edge of the first hole to an inner side of the first bead. The second metal plate has a second hole corresponding to the first hole, and a second bead surrounding the second hole and located above the inner portion. The second metal plate is disposed on the first metal plate such that the first bead faces the second plate and the second bead faces the first plate.

In the invention, a step regulation layer or resin layer formed of resin is deposited on at least a part of the inner portion of the first plate such that the second bead is placed on the step regulation layer. The step regulation layer may have, according to the object of regulating the surface pressure, an equal thickness or unequal thickness.

In the cylinder head gasket, since the step regulation layer formed of resin is disposed between the second bead and the first plate, the height between the first bead and the second bead can be adjusted precisely to thereby obtain the desired sealing surface pressure. Especially, since the resin layer is used for the adjustment of the step, i.e. difference of the height between the first and second beads, the precise adjustment of the thickness in the range of 10 µm can be made, so that the adjustment of the sealing surface pressure can be precisely made according to the demand for the gasket. Namely, since the resin layer can be formed by spraying or printing, it is possible to form the layer at the thin thickness less than 30 µm. Also, since the multiple coating can be easily made by the multiple printing and so on, it is possible to adjust the thickness in the range of 10 µm.

The resin layer is softer than a metal shim and harder than a rubber coating, so that it operates as an absorbing material. Therefore, the damage of the second bead is protected. Since the resin layer with the appropriate softness is installed between the second bead and the first plate, the resin layer exhibits the sealing ability to improve the sealing between the first and second metal plates.

Incidentally, in case the metal shim is used, this kind of small adjustment can not be made. The adjustment of about 30-100 µm is the limit. Also, in case a material, such as gum layer softer than the resin layer, is used, the material may flow or break in use as the pressure increases. Therefore, it can not provide the sealing function nor absorbing ability.

In the above head gasket, the step regulation layer is formed to extend to the inner side area of the first bead. The inner side area means a rising portion at the inner side of the first bead, i.e. from a projecting portion of a plane portion of the plate where the first bead is formed to a top of the first bead. The outer end of the step regulation layer is located in the inner side area.

In this structure, in case a space between the first and second beads is narrow and the metal plates are laterally shifted, even if the side portions of the beads are likely to contact with each other, the resin layer disposed on the inner side area of the first bead operates as an absorbing material. Therefore, the damages of both beads are prevented. Also, since the side portions of the beads abut against each other through the resin layer, the seal line is formed at this portion.

In the above gasket, the step regulation layer has the hardness of F to 6H in pencil hardness. If the step regulation layer is softer than F in pencil hardness, the step regulation layer may flow or break by pressure. If the step regulation layer is harder than 6H in pencil hardness, the sealing and absorbing abilities become bad. Therefore, the step regulation layer is formed to have the hardness of F to 6H in pencil hardness.

In the gasket of the invention, the step regulation layer may be epoxy resin, phenol resin, phenoxy resin, fluoroplastics and polyamideimido, or combination thereof. Although the step regulation layer may be formed of various resins, it is preferable to use epoxy resin, phenol resin, phenoxy resin, fluoroplastics, polyamideimido or combination thereof in view of hardness and easy application. Especially, the phenoxy resin has heat resistance over 200 _{°}C, and in view of working ability and physical characteristics in coating, it is most preferable to use the phenoxy resin.

In the invention, the step regulation layer is applied by screen printing. Although the resin layer around the hole for the cylinder bore may be formed by spraying using a mask, the resin layer can be easily formed even in a complicated shape if the screen printing is used. Further, by multiple printings, the layer can be formed easily with different thicknesses. Thus, it is possible to easily form the resin layer with adequate thickness according to the position thereof, and to make precise step regulation layer. Also, it is possible to make the resin layer with various shapes and thicknesses and to have a multiple structure with different materials by the multiple printings.

The gasket of the invention may be formed only by the first and second plates, and have one or more additional plates in addition to the first and second plates. Also, the gasket may have additional resin layer or gum coating in addition to the step regulation layer explained above.

### Brief Description of the Drawings

Fig. 1 is a perspective sectional view of a first embodiment of a cylinder head gasket of the invention;
Fig. 2 is a perspective sectional view of a second embodiment of the invention;
Fig. 3 is a plan view of a conventional head gasket; and
Fig. 4 is a perspective sectional view taken along line 4-4 in Fig. 3.

### Detailed Description of Preferred Embodiments

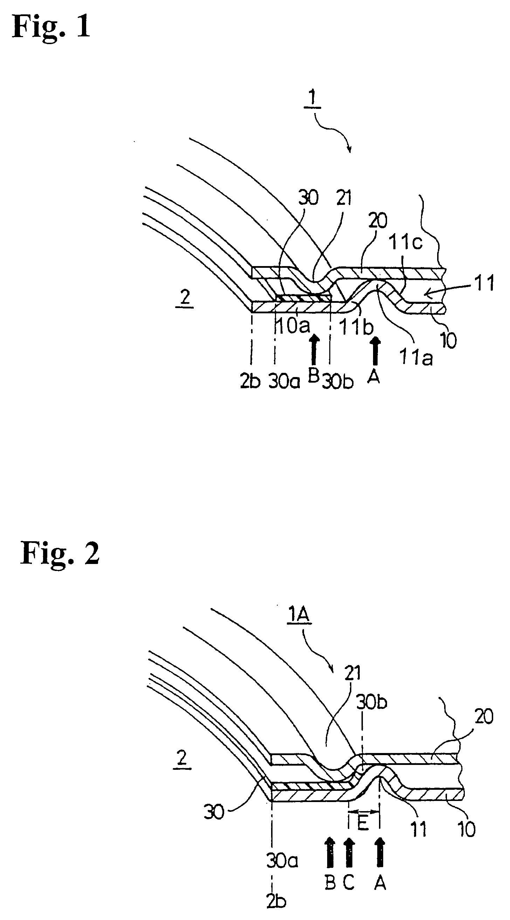

Now, the specific embodiments of the invention will be explained with reference to the drawings. Incidentally, the drawings schematically show the structures of a bead and a step regulation layer to understand easily, so that the ratio and size of the components are different. Especially, in Figs. 1, 2 and 4, the diameter of the hole of the cylinder bore, the height of the bead, the thickness of the plate and relations thereof are different from the actual structure.

A cylinder head gasket 1 is, as in the head gasket 1X shown in Fig. 3, designed to seal between a cylinder head and a cylinder block (both not shown) of an internal combustion engine, and is structured by a first metal plate 10 and a second metal plate 20, which are laminated together and made of metal superior to mechanical strength and durability. The gasket 1 includes holes 2 for cylinder bores, oil holes 3, water waters 4, bolt holes 5 and so on.

As the materials for the first and second metal plates 10, 20 of the head gasket 1, hard metal, such as soft steel plate, stainless steel plate and spring plate, or ductile metal, such as copper and aluminum plates, may be used.

As shown in Fig. 1, in order to seal around the hole 2 for the cylinder bore, a first bead 11 is formed entirely around the periphery 2b of the hole 2 for the cylinder bore to form a main seal portion as a first seal line A.

In order to protect the first bead 11 from creep relaxation, as shown in Figs. 1 and 2, the second metal plate 20 is laminated over the first metal plate 10 at the projection side of the first bead 11. The second metal plate 20 has a second bead 21 at a position inside the first bead 11 at the time of lamination. The second bead 21 and the first bead 11 are oriented in the directions to face each other between the plates 10, 20. The second bead forms a second seal line B inside the first seal line A.

The metal plate 10 includes an inner portion 10a between the hole 2 and the bead 11. The bead 11 includes a top portion 11a, and inner and outer side portions 11b, 11c on both sides of the bead.

Further, as shown in Fig. 1, a step regulation layer or resin layer 30 formed of resin is formed at an inner side of the first bead 11 of the first metal plate 10, i.e. inner portion 10a. The step regulation layer 30 has an inner end 30a inside the second bead 21, and an outer end 30b outside the second bead 21 to have an annular shape with a hole therein. Namely, the width of the step regulation layer 30 extends from the inside to the outside of the second bead 21 at the time of lamination.

On the other hand, as shown in Fig. 2, the outer end 30b of the step regulation layer 30 may be extended to an inner side area E or inner side portion 11b of the bead 11. The inner end 30a may be made larger than the periphery 2b of the hole 2 for the cylinder bore, as shown in Fig. 1, or may have the same size to align the ends 2b, 30a, as shown in Fig. 2.

In detail, the step regulation layer 30 is formed at a position where the second bead 21 abuts against the first metal plate 10 when the head gasket 1 or 1A is compressed at the time of operation of the engine. The step regulation layer 30 regulates the height of the second bead 21 relative to the first bead 11 at the time of compression.

The step regulation layer 30 has a hardness such that the layer 30 is deformed, but not damaged when the layer 30 is compressed, i.e. F-6H in pencil hardness, and is formed of epoxy resin, phenol resin, phenoxy resin, fluoroplastics, polyamideimido, or combination thereof, which is applied by screen printing. In view of working ability and physical characteristics of the coating, the phenoxy resin may be preferably used.

Although the thickness of the step regulation layer 30 depends on the size of the engine, for example, in case the diameter of the hole 2 for the cylinder bore is 80 mm and the thickness of each of the first and second metal plates 10, 20 is 150-500 µm, the thickness of the step regulation layer 30 is 5-150 µm.

The step regulation layer 30 is generally formed to have the equal thickness, but need not have equal thickness. The thickness may be partly changed according to the necessity. Also, several resin layers may be laminated.

In order to seal oil circulating through the oil gallery and water in the water jacket, sealing means, such as beads, for forming appropriate sealing pressures may be formed around oil holes 3 and water holes 4 to be sealed.

Also, surface coatings may be applied on the entire surfaces of the gasket 1 according to necessity. As the material for the surface coating, it is preferable to have good durability and heatproof property relative to the combustion gas and liquid, i.e. oil and water, to be sealed, and also have softness and recovery ability for the compressing deformation. The material may be a rubber type material, such as NBR gum, fluorine rubber, silicone rubber, hydrogen added nitrilebutadiene rubber.

In case the rubber type material is used, the material has resiliency. Therefore, when the rubber type material is coated on the surfaces of the plates, a tool mark and so on formed on the cylinder head and the cylinder block can be absorbed.

In the gasket 1, 1A as stated above, since the step regulation layer 30 made of resin is disposed between the second bead 21 and the first metal plate 10, the height between the first bead 11 and the second bead 21 is regulated precisely by the resin layer 30. Therefore, the desired sealing surface pressure can be obtained easily.

Especially, since the resin layer 30 is employed for the step regulation, the precise thickness adjustment in the range of 10 µm can be made. Also, it is possible to easily adjust the thickness in the range of 10 µm by the multiple printing.

Further, the step regulation layer 30 is disposed between the second bead 21 and the first metal plate 10, and the step regulation layer 30 is made of resin softer than the metal shim and harder than the rubber coating. Therefore, the step regulation layer 30 has the operation and advantages as the absorbing material, and prevents the damage of the second bead 21.

Further, since the resin layer 30 with the appropriate softness is disposed between the second bead 21 and the first metal plate 10, the resin layer 30 exhibits the sealing ability to improve the sealing between the first metal plate 10 and the second metal plate 20. Incidentally, if a rubber layer softer than the resin layer is used, the rubber layer flows or breaks by the compressing force, so that the rubber layer can not exhibit sealing ability and absorbing operation.

In case the resin layer 30 for the regulation of the step is extended to the side area E of the first bead 11, when the space between the first bead 11 and the second bead 21 is narrow and the metal plates 10, 20 are shifted laterally to allow the side portions of the beads 11, 21 to contact with each other, the resin layer 30 disposed at the side area E of the bead 11 operates as an absorbing material. Therefore, the damage of the beads 11, 21 can be prevented. Also, in this case, since the side portions of the beads 11, 21 contact with each other through the resin layer 30, a seal line C with superior sealing ability is formed at this portion.

Since the resin layer can be applied easily by screen printing or spraying using a mask, the management of the parts and processing can be made easily. Also, there are advantages such that the increase of the steps and the increase of the manufacturing cast are low.

## Claims

1. A cylinder head gasket (1, 1A) for an internal combustion engine having a hole to be sealed, comprising:
a first metal plate (10) having a first hole corresponding to the hole of the engine, a first bead (11) surrounding the first hole, and an inner portion (10a) extending from an edge of the first hole to an inner side of the first bead, and
a second metal plate (20) having a second hole corresponding to the first hole, and a second bead (21) surrounding the second hole and located above the inner portion, said second metal plate being disposed over the first metal plate such that the first bead faces the second plate and the second bead faces the first plate,
said cylinder head gasket (1, 1A) being **characterized in that** a step regulation layer (30) formed of resin is deposited on at least a part of the inner portion (10a) of the first plate such that the second bead (21) is placed on the step regulation layer.

2. A cylinder head gasket (1A) according to claim 1, wherein said first bead (11) includes a top portion (11a), and inner and outer side portions (11b, 11c) on two sides of the bead, said step regulation layer (30) extending to the inner side portion (11b).

3. A cylinder head gasket (1, 1A) according to claim 1 or 2, wherein said step regulation layer (30) has heatproof characteristic and compressibility to securely seal between the first and second metal plates.

4. A cylinder head gasket (1, 1A) according to any one of claims 1 to 3, wherein said step regulation layer (30) has a hardness of F to 6H in pencil hardness.

5. A cylinder head gasket (1, 1A) according to any one of claims 1 to 4, wherein said step regulation layer (30) is selected from the group consisting of epoxy resin, phenol resin, phenoxy resin, fluoroplastics and polyamideimido.
